# EUROPEAN PATENT APPLICATION

(11) **EP 4 391 687 A1**
(43) Date of publication of application: **26.06.2024**
(21) Application number: 21954268.5
(22) Date of filing: 20.08.2021
(51) Int. Cl.: H04W 72/12

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2021/030636
(87) International publication number: WO 2023/021701

(57) **Abstract**

A terminal according to one aspect of the present disclosure includes: a control section that, when UL transmission using a plurality of panels including at least a first panel and a second panel is supported, performs in panel unit drop or mapping of at least one of a UL channel and a UL signal overlapping with each other in time domain to determine a first UL transmission corresponding to the first panel and a second UL transmission corresponding to the second panel; and a transmitting section that, when the first UL transmission and the second UL transmission overlap with each other in time domain, transmits at least one of the first UL transmission and the second UL transmission, on the basis of a specific condition. According to one aspect of the present disclosure, it is possible to appropriately perform simultaneous UL transmission using a plurality of panels.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In NR, a UE can use one of a plurality of panels (plurality of beams) for uplink (UL) transmission. In Rel. 18 or later versions, for improvement of UL throughput/reliability, support for simultaneous UL transmission using a plurality of panels for one or more transmission/reception points (TRPs) is under study.

However, studies have not sufficiently been made on simultaneous UL transmission using a plurality of panels. Unless such simultaneous UL transmission using a plurality of panels is appropriately performed, degradation of system performance, such as reduction of throughput, may be caused.

In view of this, the present disclosure has one object to provide a terminal, a radio communication method, and a base station that appropriately perform simultaneous UL transmission using a plurality of panels.

### Solution to Problem

A terminal according to one aspect of the present disclosure includes: a control section that, when UL transmission using a plurality of panels including at least a first panel and a second panel is supported, performs in panel unit drop or mapping of at least one of a UL channel and a UL signal overlapping with each other in time domain to determine a first UL transmission corresponding to the first panel and a second UL transmission corresponding to the second panel; and a transmitting section that, when the first UL transmission and the second UL transmission overlap with each other in time domain, transmits at least one of the first UL transmission and the second UL transmission, on the basis of a specific condition.

### Advantageous Effects of Invention

According to one aspect of the present disclosure, it is possible to appropriately perform simultaneous UL transmission using a plurality of panels.

### Brief Description of Drawings

[FIG. 1] FIG. 1 is a diagram to show an example of associations between precoder types and TPMI indices.
[FIG. 2] FIGS. 2A to 2C are each a diagram to show an example of a PUSCH transmission using a plurality of panels.
[FIG. 3] FIGS. 3A to 3B are each a diagram to show an example of UL transmission control based on a priority.
[FIG. 4] FIG. 4 is a diagram to show another example of the UL transmission control based on the priority.
[FIG. 5] FIGS. 5A to 5C are diagrams to show examples of schemes 1 to 3 for simultaneous UL transmission using a plurality of panels.
[FIG. 6] FIGS. 6A and 6B are each a diagram to show an example of multi-panel UL simultaneous transmission.
[FIG. 7] FIG. 7 is a diagram to show an example of simultaneous transmission of a PUCCH and a PUSCH according to a first embodiment.
[FIG. 8] FIG. 8 is a diagram to show an example of simultaneous transmission of an SRS and a PUCCH/PUSCH according to a second embodiment.
[FIG. 9] FIG. 9 is a diagram to show an example of simultaneous transmission of a plurality of SRSs according to a third embodiment.
[FIG. 10] FIG. 10 is a diagram to show an example of a schematic structure of a radio communication system according to one embodiment.
[FIG. 11] FIG. 11 is a diagram to show an example of a structure of a base station according to one embodiment.
[FIG. 12] FIG. 12 is a diagram to show an example of a structure of a user terminal according to one embodiment.
[FIG. 13] FIG. 13 is a diagram to show an example of a hardware structure of the base station and the user terminal according to one embodiment.

### Description of Embodiments

### (PUSCH Precoder)

For NR, it is studied that a UE supports at least one of codebook (CB) based transmission and non-codebook (NCB) based transmission.

For example, it is studied that the UE judges a precoder (precoding matrix) for at least one of CB based and NCB based uplink shared channel (Physical Uplink Shared Channel (PUSCH)) transmissions by using at least a reference signal for measurement (Sounding Reference Signal (SRS)) resource indicator (SRS Resource Indicator (SRI)).

In a case of CB based transmission, the UE may determine a precoder for the PUSCH transmission, based on an SRI, a transmitted rank indicator (TRI), a transmitted precoding matrix indicator (TPMI), and the like. In a case of NCB based transmission, the UE may determine a precoder for the PUSCH transmission, based on the SRI.

The UE may be notified of the SRI, the TRI, the TPMI, and the like by using downlink control information (DCI). The SRI may be specified by an SRS Resource Indicator field (SRI field) of the DCI or may be specified by a parameter "srs-ResourceIndicator" included in an RRC information element "ConfiguredGrantConfig" for a configured grant PUSCH. The TRI and the TPMI may be specified by precoding information and number of layers field ("Precoding information and number of layers" field) of the DCI.

The UE may report UE capability information related to a precoder type and be configured, by a base station, with the precoder type based on the UE capability information by higher layer signaling. The UE capability information may be precoder type information to be used by the UE in PUSCH transmission (which may be indicated by an RRC parameter "pusch-TransCoherence").

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. For example, the broadcast information may be master information blocks (MIBs), system information blocks (SIBs), and the like.

The UE may determine a precoder to be used for the PUSCH transmission, based on precoder type information (which may be indicated by an RRC parameter "codebookSubset") included in PUSCH configuration information notified by higher layer signaling ("PUSCH-Config" information element of RRC signaling). The UE may be configured with a subset of a PMI specified by the TPMI, by codebookSubset.

Note that the precoder type may be specified by any of or a combination of at least two of full coherent (fully coherent, coherent), partial coherent, and non-coherent (non coherent) (which may be indicated, for example, by a parameter such as "fullyAndPartialAndNonCoherent" or "partialAndNonCoherent."

Full coherent may mean that all the antenna ports to be used for transmission are synchronized (which may be expressed as being able to be matched in terms of phase, having the same precoder to be applied, and the like). Partial coherent may mean that some ports of the antenna ports to be used for transmission are synchronized but the ports and the other ports are not synchronized. Non-coherent may mean that the antenna ports to be used for transmission are not synchronized.

Note that a UE that supports the precoder type, full coherent, may be assumed to support the precoder types, partial coherent and non-coherent. A UE that supports the precoder type, partial coherent, may be assumed to support the precoder type, non-coherent.

The precoder type may be interpreted as coherency, PUSCH transmission coherence, a coherent type, a coherence type, a codebook type, a codebook subset, a codebook subset type, and the like.

The UE may determine a precoding matrix corresponding to the TPMI index obtained from DCI for scheduling UL transmission (for example, DCI format 0_1, this similarly applies below), from a plurality of precoders (which may be referred to as a precoding matrix, a codebook, and the like) for CB based transmission.

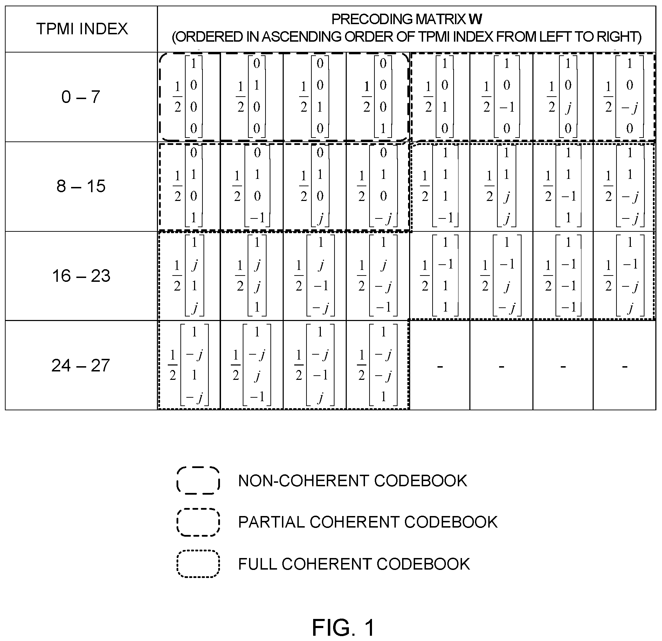

FIG. 1 is a diagram to show an example of associations between precoder types and TPMI indices. FIG. 1 corresponds to a table of a precoding matrix W for single-layer (rank 1) transmission using four antenna ports by DFT-s-OFDM (Discrete Fourier Transform spread OFDM) (for which transform precoding is enabled).

In FIG. 1, in a case where the precoder type (codebookSubset) is fully and partial and non-coherent (fullyAndPartialAndNonCoherent), the UE is notified of any TPMI among 0 to 27 for single-layer transmission. In a case where the precoder type is partial and non-coherent (partialAndNonCoherent), the UE is configured with any TPMI among 0 to 11 for single-layer transmission. In a case where the precoder type is non-coherent (nonCoherent), the UE is configured with any TPMI among 0 to 3 for single-layer transmission.

Note that, as shown in FIG. 1, a precoding matrix with only one element of each column not being 0 may be referred to as a non-coherent codebook. A precoding matrix with a certain number of (but not all) elements of each column not being 0 may be referred to as a partial coherent codebook. A precoding matrix with all the elements of each column not being 0 may be referred to as a fully coherent codebook.

The non-coherent codebook and the partial coherent codebook may be referred to as antenna selection precoders. The fully coherent codebook may be referred to as a non-antenna selection precoder.

Note that, in the present disclosure, the partial coherent codebook may correspond to codebooks (precoding matrices) each corresponding to a TPMI with which the UE configured with a partial coherent codebook subset (for example, an RRC parameter "codebookSubset" = "partialAndNonCoherent") is specified by DCI for codebook based transmission, excluding codebooks each corresponding to a TPMI with which the UE configured with a non-coherent codebook subset (for example, an RRC parameter "codebookSubset" = "nonCoherent") is specified (in other words, in a case of single-layer transmission with four antenna ports, codebooks with TPMI = 4 to 11).

Note that, in the present disclosure, the fully coherent codebook may correspond to codebooks (precoding matrices) each corresponding to a TPMI with which the UE configured with a fully coherent codebook subset (for example, an RRC parameter "codebookSubset" = "fullyAndPartialAndNonCoherent") is specified by DCI for codebook based transmission, excluding codebooks each corresponding to a TPMI with which the UE configured with a partial coherent codebook subset (for example, an RRC parameter "codebookSubset" = "partialAndNonCoherent") is specified (in other words, in a case of single-layer transmission with four antenna ports, codebooks with TPMI = 12 to 27).

### (Spatial Relations for SRS and PUSCH)

The UE may receive information to be used for transmission of a reference signal for measurement (for example, sounding reference signal (SRS)) (SRS configuration information, for example, a parameter in an RRC control element "SRS-Config").

Specifically, the UE may receive at least one of information related to one or a plurality of SRS resource sets (SRS resource set information, for example, an RRC control element "SRS-ResourceSet") and information related to one or a plurality of SRS resources (SRS resource information, for example an RRC control element "SRS-Resource").

One SRS resource set may be related to a certain number of SRS resources (may group the certain number of SRS resources). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-ResourceId) used in the resource set, an SRS resource type, and information of SRS usage.

Here, the SRS resource type may indicate any one of periodic SRS (P-SRS), semi-persistent SRS (SP-SRS), and aperiodic SRS (A-SRS, AP-SRS). Note that the UE may transmit a P-SRS and an SP-SRS periodically (or periodically after activation), and transmit an A-SRS, based on an SRS request in DCI.

The usage (RRC parameter "usage," L1 (Layer-1) parameter "SRS-SetUse") may be, for example, beam management (beamManagement), codebook based transmission (codebook (CB)), non-codebook based transmission (nonCodebook (NCB)), antenna switching (antennaSwitching), or the like. An SRS with usage of codebook based transmission or non-codebook based transmission may be used to determine a precoder for codebook based or non-codebook based PUSCH transmission based on an SRI.

For example, in a case of codebook based transmission, the UE may determine a precoder for the PUSCH transmission, based on an SRI, a transmitted rank indicator (TRI), and a transmitted precoding matrix indicator (TPMI). In a case of non-codebook based transmission, the UE may determine a precoder for the PUSCH transmission, based on the SRI.

The SRS resource information may include an SRS resource ID (SRS-ResourceId), the number of SRS ports, SRS port numbers, transmission Comb, SRS resource mapping (for example, the time and/or frequency resource location, a resource offset, resource periodicity, the number of repetitions, the number of SRS symbols, an SRS bandwidth, and the like), hopping related information, an SRS resource type, a sequence ID, spatial relation information of the SRS, and the like.

The spatial relation information of the SRS (for example, an RRC information element "spatialRelationInfo") may indicate spatial relation information between a certain reference signal and the SRS. The certain reference signal may be at least one of a synchronization signal / broadcast channel (Synchronization Signal / Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of the SRS may include at least one of an SSB index, a CSI-RS resource ID, and an SRS resource ID as an index of the certain reference signal.

Note that, in the present disclosure, an SSB index, an SSB resource ID, and an SSBRI (SSB Resource Indicator) may be interchangeably interpreted. A CSI-RS index, a CSI-RS resource ID, and a CRI (CSI-RS Resource Indicator) may be interchangeably interpreted. An SRS index, an SRS resource ID, and an SRI may be interchangeably interpreted.

The spatial relation information of the SRS may include a serving cell index, a BWP index (BWP ID), and the like corresponding to the certain reference signal.

In NR, transmission of an uplink signal may be controlled based on the presence of beam correspondence (BC). BC may be a capability of a certain node (for example, the base station or the UE) to determine a beam (transmit beam, Tx beam) to be used for transmission of a signal, based on a beam (receive beam, Rx beam) used for reception of the signal, for example.

Note that the BC may be referred to as transmit/receive beam correspondence (Tx/Rx beam correspondence), beam reciprocity, beam calibration, calibrated/non-calibrated, reciprocity calibrated/non-calibrated, correspondence degree, matching degree, and the like.

For example, in a case without BC, the UE may use the same beam (spatial domain transmission filter) as that of an SRS (or an SRS resource) indicated by the base station, based on a measurement result of one or more SRSs (or SRS resources), to transmit an uplink signal (for example, a PUSCH, a PUCCH, an SRS, or the like).

In contrast, in a case with BC, the UE may use the same or a corresponding beam (spatial domain transmission filter) as or to that of a beam (spatial domain reception filter) used for reception of a certain SSB or CSI-RS (or CSI-RS resource), to transmit an uplink signal (for example, a PUSCH, a PUCCH, an SRS, or the like).

When the UE is configured with spatial relation information related to an SSB or a CSI-RS and an SRS for a certain SRS resource (for example, in a case with BC), the UE may transmit the SRS resource by using the same spatial domain filter (spatial domain transmission filter) as a spatial domain filter for reception (spatial domain reception filter) of the SSB or CSI-RS. In this case, the UE may assume that the UE receive beam for the SSB or CSI-RS and a UE transmit beam for the SRS may be the same.

When the UE is configured, for a certain SRS (target SRS) resource, with spatial relation information related to another SRS (reference SRS) and the SRS (target SRS) (for example, in a case without BC), the UE may transmit the target SRS resource by using the same spatial domain filter (spatial domain transmission filter) as a spatial domain filter for transmission (spatial domain transmission filter) of the reference SRS. In other words, in this case, the UE may assume that the UE transmit beam for the reference SRS and a UE transmit beam for the target SRS may be the same.

The UE may determine, based on the value of a certain field (for example, an SRS resource indicator (SRI) field) in DCI (for example, DCI format 0_1), a spatial relation of a PUSCH scheduled by the DCI. Specifically, the UE may use spatial relation information (for example, an RRC information element "spatialRelationInfo") of the SRS determined based on the value of the certain field (for example, the SRI), for PUSCH transmission.

In a case of using codebook based transmission for the PUSCH, the UE may be configured with two SRS resources by RRC and indicated with one of the two SRS resources by DCI (certain one-bit field). In a case of using non-codebook based transmission for the PUSCH, the UE may be configured with four SRS resources by RRC and indicated with one of the four SRS resources by DCI (certain two-bit field). To use a spatial relation other than the two or four spatial relations configured by RRC, RRC reconfiguration is needed.

Note that a DL-RS can be configured for a spatial relation of an SRS resource to be used for a PUSCH. For example, for an SP-SRS, the UE can be configured with spatial relations of a plurality of (for example, up to 16) SRS resources by RRC and indicated with one of the plurality of SRS resources by a MAC CE.

### (Transmission with Plurality of Panels)

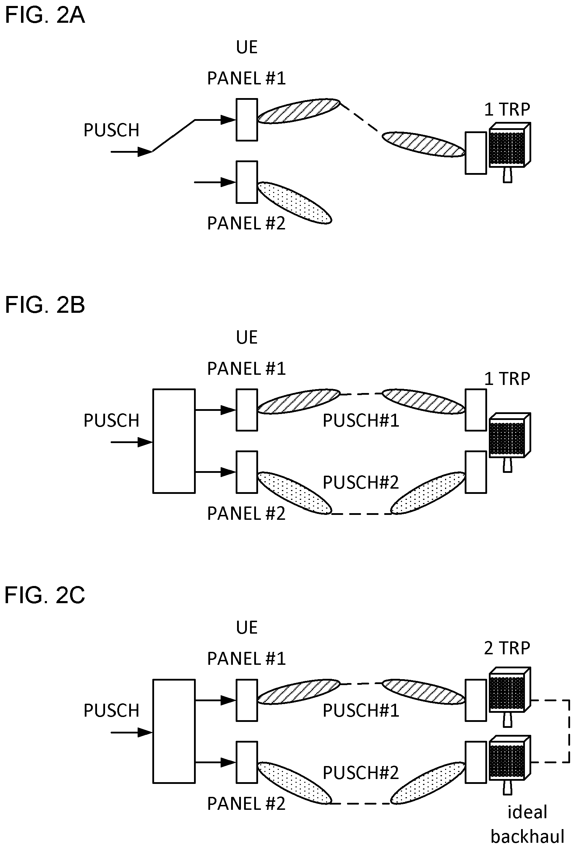

In a UE in Rel. 15 and Rel. 16, only one beam and panel are used for UL transmission at one time point (FIG. 2A). In Rel. 17, for improvement of UL throughput and reliability, simultaneous UL transmission with a plurality of beams and plurality of panels for one or more TRPs is under study.

For simultaneous UL transmission using a plurality of beams and plurality of panels, reception by one TRP with a plurality of panels (FIG. 2B), or reception by two TRPs with an ideal backhaul (FIG. 2C) is under study. A single PDCCH for scheduling of a plurality of PUSCHs (for example, simultaneous transmission of PUSCH #1 and PUSCH #2) is under study. Support for panel-specific transmission and introduction of a panel ID are under study.

A base station may configure or indicate panel-specific transmission for UL transmission by using UL TCI or a panel ID. The UL TCI (UL TCI state) may be based on signaling similar to DL beam indication supported in Rel. 15. A panel ID may be implicitly or explicitly applied to transmission of at least one of a target RS resource or a target RS resource set, a PUCCH, an SRS, and a PRACH. In a case where the panel ID is explicitly notified, the panel ID may be configured in at least one of a target RS, a target channel, and a reference RS (for example, a DL RS resource configuration or spatial relation information).

### (UL TCI state)

For Rel-16 NR, it is under study that a UL TCI state is used as a beam indication method in UL. Notification of the UL TCI state is similar to notification of a DL beam (DL TCI state) of a UE. Note that a DL TCI state and a TCI state for a PDCCH/PDSCH may be interchangeably interpreted.

A channel/signal (which may be referred to as a target channel/RS) for which the UL TCI state is configured (specified) may be, for example, at least one of a PUSCH (a DMRS of the PUSCH), a PUCCH (a DMRS of the PUCCH), a random access channel (Physical Random Access Channel (PRACH)), an SRS, and the like.

An RS (source RS) to have a QCL relationship with the channel/signal may be, a DL RS (for example, SSB, CSI-RS, TRS, or the like) or may be a UL RS (for example, SRS, SRS for beam management, or the like), for example.

In a UL TCI state, an RS to have a QCL relationship with the channel/signal may be associated with a panel ID for reception or transmission of the RS. The association may be explicitly configured (or specified) by higher layer signaling (for example, RRC signaling, MAC CE, or the like) or may be implicitly judged.

The correspondence between the RS and the panel ID may be configured being included in UL TCI state information or may be configured being included in at least one of resource configuration information, spatial relation information, and the like of the RS.

A QCL type indicated by the UL TCI state may be existing QCL types A to D, may be another QCL type, and may include certain spatial relation, an associated antenna port (port index), or the like.

When an associated panel ID is specified (for example, specified by DCI) for a UL transmission, the UE may perform the UL transmission by using a panel corresponding to the panel ID. A panel ID may be associated with a UL TCI state. When a UL TCI state is specified (or activated) for a certain UL channel/signal, the UE may identify a panel to be used for transmission of the UL channel/signal in accordance with a panel ID associated with the UL TCI state.

### (Traffic Types)

In future radio communication systems (for example, NR), traffic types (also referred to as services, service types, communication types, use cases, or the like), such as further enhancement of mobile broadband (for example, enhanced Mobile Broadband (eMBB)), machine type communication that implements multiple simultaneous connection (for example, massive Machine Type Communications (mMTC), Internet of Things (IoT)), and high-reliable and low-latency communication (for example, Ultra-Reliable and Low-Latency Communications (URLLC)), are assumed. For example, in URLLC, lower latency and higher reliability in comparison to eMBB are required.

The traffic type may be identified based on at least one of the following in a physical layer.
- Logical channel having different priority
- Modulation and coding scheme (MCS) table (MCS index table)
- Channel quality indication (CQI) table
- DCI format
- (Radio network temporary indicator (RNTI (System Information-Radio Network Temporary Identifier))) used for scrambling (masking) of cyclic redundancy check (CRC) bits included in (added to) the DCI (DCI format)
- RRC (Radio Resource Control) parameter
- Specific RNTI (for example, an RNTI for URLLC, an MCS-C-RNTI, or the like)
- Search space
- Certain field in DCI (for example, a newly added field or reuse of an existing field)

Specifically, the traffic type of an HARQ-ACK for a PDSCH may be determined based on at least one of the following.
- MCS index table used for determination of at least one of a modulation order, a target code rate, and a transport block size (TBS) of the PDSCH (for example, whether to use MCS index table 3)
- RNTI used for CRC scrambling of DCI used for scheduling of the PDSCH (for example, which of C-RNTI or MCS-C-RNTI is used for the CRC scrambling)

The traffic type of an SR may be determined based on a higher layer parameter used as an identifier of the SR (SR-ID). The higher layer parameter may indicate whether the traffic type of the SR is eMBB or URLLC.

The traffic type of CSI may be determined based on configuration information (CSIreportSetting) related to a CSI report, a DCI type or DCI transmission parameter used for the trigger, or the like. The configuration information, the DCI type, and the like may indicate whether the traffic type of the CSI is eMBB or URLLC. The configuration information may be a higher layer parameter.

The traffic type of a PUSCH may be determined based on at least one of the following.
- MCS index table used for determination of at least one of a modulation order, a target code rate, and a TBS of the PUSCH (for example, whether to use MCS index table 3)
- RNTI used for CRC scrambling of DCI used for scheduling of the PUSCH (for example, which of C-RNTI or MCS-C-RNTI is used for the CRC scrambling)

The traffic type may be associated with a communication requirement (requirement or required condition such as latency and error rate), a kind of data (such as audio and data), and the like.

A difference between a requirement for URLLC and a requirement for eMBB may be in that the latency for URLLC is smaller than the latency for eMBB, and may be in that the requirement for URLLC includes a requirement of reliability.

For example, a requirement of user (U) plane latency for eMBB may include a requirement that the U plane latency of downlink is 4 ms and the U plane latency of uplink is 4 ms. On the other hand, a requirement of U plane latency for URLLC may include a requirement that the U plane latency of downlink is 0.5 ms and the U plane latency of uplink is 0.5 ms. A requirement of reliability for URLLC may include a requirement that the error rate of 32 bytes is 10⁻⁵ in U plane latency of 1 ms.

As enhanced Ultra Reliable and Low Latency Communications (eURLLC), enhancement of traffic reliability mainly for unicast data is under study. In the following, both of URLLC and eURLLC will be simply referred to as "URLLC," unless specified otherwise.

### (Configuration of Priority)

For NR in Rel. 16 or later versions, it is under study to configure a priority of a plurality of levels (for example, two levels) for a certain signal or channel. For example, it is assumed that a different priority is configured for each signal or channel corresponding to a respective different traffic type (also referred to as service, service type, communication type, use case, or the like) for control of communication (for example, transmission control in collision and the like). This allows a different priority to be configured depending on a service type or the like for the same signal or channel for control of communication.

The priority may be configured for at least one of a signal (for example, UCI such as HARQ-ACK, reference signal, and the like), a channel (PDSCH, PUSCH, PUCCH, and the like), a reference signal (for example, channel state information (CSI), sounding reference signal (SRS), and the like), a scheduling request (SR), and an HARQ-ACK codebook. The priority may be configured for each of a PUCCH to be used for transmission of an SR, a PUCCH to be used for transmission of an HARQ-ACK, and a PUCCH to be used for transmission of CSI.

For the priority, a first priority (for example, high) and a second priority (for example, low) lower than the first priority may be defined. Alternatively, three or more levels of priorities may be configured.

For example, the priority may be configured for an HARQ-ACK for a PDSCH to be dynamically scheduled, an HARQ-ACK for a semi-persistent PDSCH (SPS PDSCH), and an HARQ-ACK for SPS PDSCH release. Alternatively, the priority may be configured for an HARQ-ACK codebook corresponding to these HARQ-ACKs. Note that, when the priority is configured for a PDSCH, the priority of the PDSCH may be interpreted as the priority of the HARQ-ACK for the PDSCH.

The priority may be configured for a dynamic grant based PUSCH, a configured grant based PUSCH, and the like.

Information related to the priority may be notified to the UE, from the base station, by using at least one of higher layer signaling and DCI. For example, the priority of a scheduling request may be configured by a higher layer parameter (for example, schedulingRequestPriority). The priority of an HARQ-ACK for a PDSCH (for example, dynamic PDSCH) scheduled by DCI may be notified using the DCI. The priority of an HARQ-ACK for an SPS PDSCH may be configured by a higher parameter (for example, HARQ-ACK-Codebook-indicator-forSPS), or may be notified using DCI indicating activation of the SPS PDSCH. A P-CSI/SP-CSI to be transmitted on a PUCCH may be configured with a certain priority (for example, low). On the other hand, the priority of an A-CSI/SP-CSI to be transmitted on a PUSCH may be notified using DCI (for example, DCI for trigger or DCI for activation).

The priority of a dynamic grant based PUSCH may be notified by using DCI scheduling the PUSCH. The priority of a configured grant based PUSCH may be configured by a higher layer parameter (for example, priority). A P-SRS/SP-SRS and an A-SRS triggered by DCI (for example, DCI format 0_1/DCI format 2_3) may be configured with a certain priority (for example, low).

### (Overlap in UL Transmission)

When a plurality of UL signals/UL channels overlap (or have collision) with each other, the UE may control the UL transmission on the basis of the priority.

Overlap between a plurality of UL signals/UL channels may be a case where time resources (or time resources and frequency resources) of the plurality of UL signals/UL channels overlap with each other, or a case where transmission timings of the plurality of UL signals/UL channels overlap with each other. The time resources may be interpreted as the time domain or time-domain. The time resources may be symbol, slot, sub-slot, or subframe units.

Overlap between a plurality of UL signals/UL channels in the same UE (for example, intra-UE) may mean that the plurality of UL signals/UL channels overlap with each other in at least the same time resource (for example, symbol). Collision between UL signals/UL channels in different UEs (for example, inter-UE) may mean that the plurality of UL signals/UL channels overlap with each other in the same time resource (for example, symbol) and frequency resource (for example, RB).

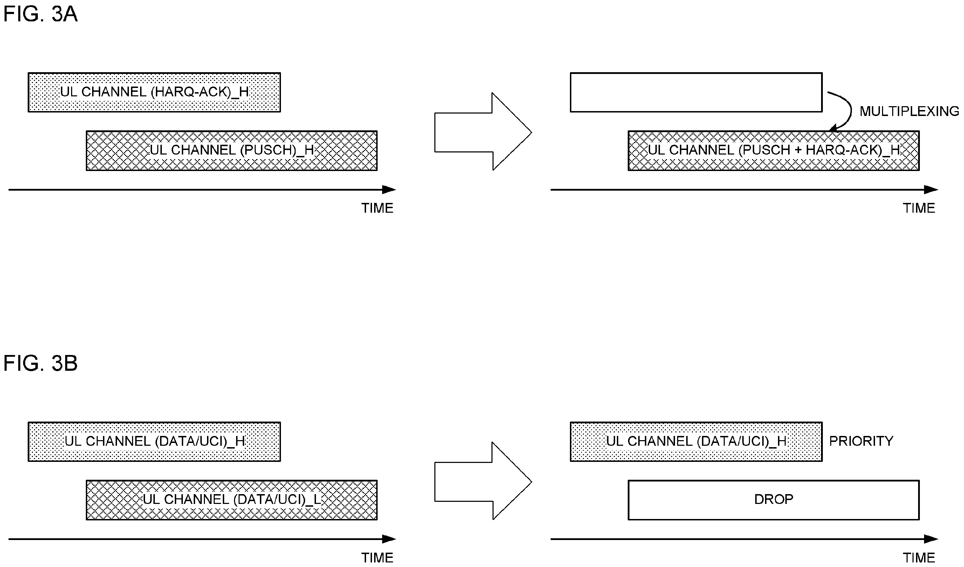

For example, when a plurality of UL signals/UL channels having the same priority overlap with each other, the UE performs control to transmit the plurality of UL signals/UL channels multiplexed on one UL channel (see FIG. 3A).

FIG. 3A shows a case where an HARQ-ACK (or a PUCCH for HARQ-ACK transmission) configured with the first priority (high) and UL data/UL-SCH (or a PUSCH for UL data/UL-SCH transmission) configured with the first priority (high) overlap with each other. In this case, the UE multiplexes (maps) the HARQ-ACK on the PUSCH to transmit both the UL data and the HARQ-ACK.

When a plurality of UL signals/UL channels having different priorities overlap with each other, the UE may perform control to perform a UL transmission with a high priority (for example, prioritize a UL transmission with a high priority) and not to perform a UL transmission with a low priority (for example, drop a UL transmission with a low priority) (see FIG. 3B).

FIG. 3B shows a case where UL data/HARQ-ACK (or a UL channel for UL data/HARQ-ACK transmission) configured with the first priority (high) and UL data/HARQ-ACK (or a UL channel for UL data/HARQ-ACK transmission) configured with the second priority (low) overlap with each other. In this case, the UE performs control to drop the UL data/HARQ-ACK with the low priority and prioritize and transmit the UL data/HARQ-ACK with the high priority. Note that the UE may change (for example, postpone or shift) a transmission timing of the UL transmission with the low priority.

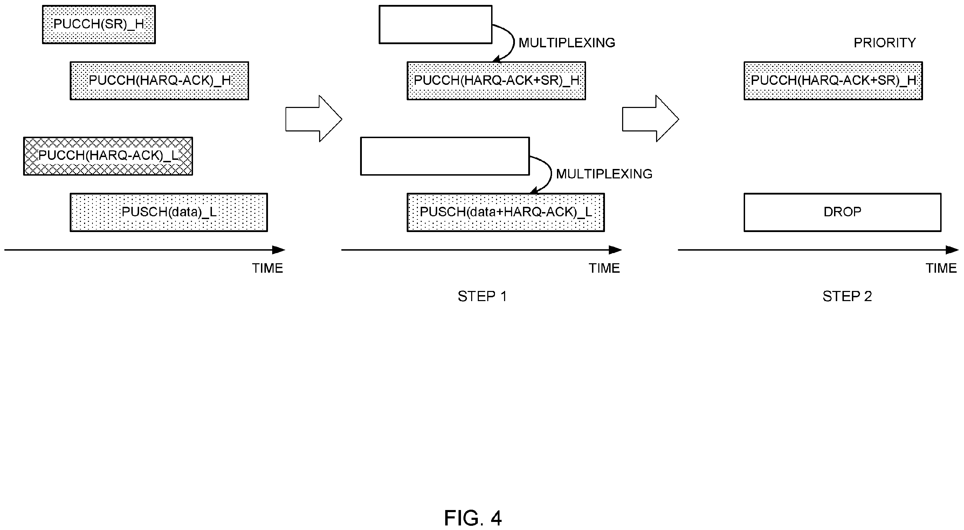

When more than two (or three or more) UL signals/UL channels overlap with each other in the time domain, the transmission may be controlled with two steps (see FIG. 4).

In step 1, one UL channel is selected on which UL signals to be transmitted in UL transmissions having the same priority are multiplexed. In FIG. 4, an SR (or a PUCCH for SR transmission) and an HARQ-ACK (or a PUCCH for HARQ-ACK transmission) each having the first priority (high) may be multiplexed on a certain UL channel (here, PUCCH for HARQ-ACK transmission). Similarly, an HARQ-ACK (or a PUCCH for HARQ-ACK transmission) and data (or a PUSCH for data/UL-SCH transmission) each having the second priority (low) may be multiplexed on a certain UL channel (here, PUSCH).

In step 2, between UL transmissions having different priorities, control may be performed to prioritize and transmit a UL transmission with a high priority and to drop a UL transmission with a low priority. In FIG. 4, the PUCCH for the SR and HARQ-ACK transmission having the first priority (high) may be prioritized and transmitted, and the PUSCH for the HARQ-ACK and data transmission having the second priority (low) may be dropped.

As described above, the UE can solve collision between a plurality of UL transmissions having the same priority in step 1, and solve collision between a plurality of UL transmissions having different priorities in step 2.

### (Collision Handling between PUCCH and PUSCH)

In the following, specific processing (collision handling) when each type of UL channels/signals overlap with each other, defined in Rel. 16 or earlier versions, will be described.

When a PUCCH resource (for example, a PUCCH for an SR) does not overlap with a PUSCH transmission after multiplexing (mapping) of UCI (for example, an HARQ-ACK) in time, the UE may transmit the PUCCH by using the PUCCH resource.

When the PUCCH resource overlaps with the PUSCH transmission in time, the UE may multiplex (map/piggyback) HARQ-ACK information/CSI report on the PUSCH. In this case, the UE need not transmit the SR.

The UE need not transmit a PUSCH overlapping with a PUCCH in time in a slot.

When a plurality of PUCCHs overlap with each other, the UE performs multiplexing of UCI and then selects one PUCCH. When the one PUCCH overlaps with a PUSCH in time, collision handling between the PUCCH and the PUSCH is performed.

### (Collision Handling between SRS and PUCCH/PUSCH)

In a certain serving cell, when a PUSCH transmission with a priority index "1" or a PUCCH transmission with a priority index "1" and an SRS transmission overlap with each other in time, the UE does not transmit the SRS in the overlapping symbol.

For a PUCCH and SRS in the same carrier, when a semi-persistent (SP-) SRS/periodic (P-) SRS is configured with a symbol the same as that of a PUCCH carrying only a CSI report, or only an L1-RSRP report, or only an L1-SINR, the UE does not transmit the SRS.

For a PUCCH and SRS in the same carrier, when an SP-SRS/P-SRS is configured with a symbol the same as that of a PUCCH carrying at least one of an HARQ-ACK, a link recovery request, and an SR, the UE does not transmit the SRS. When an aperiodic (AP-) SRS is triggered to be transmitted in a symbol the same as that of a PUCCH carrying at least one of an HARQ-ACK, a link recovery request, and an SR, the UE does not transmit the SRS. In these cases, only an SRS symbol overlapping with the symbol of the PUCCH is dropped.

For a PUCCH and SRS in the same carrier, when an AP-SRS is configured with a symbol the same as that of a PUCCH carrying only an SP-CSI/P-CSI report, or only an SP-L1-RSRP/P-L1-RSRP report, or only an L1-SINR, the UE does not transmit the PUCCH.

### (Collision Handling between SRSs)

In a case where a P-SRS/SP-SRS is configured for a symbol in which an SRS resource with the resource type (RRC parameter "resourceType") set to "aperiodic" is triggered, the UE transmits an AP-SRS resource, drops a P-SRS/SP-SRS in an overlapping symbol, and transmits a P-SRS/SP-SRS in a non-overlapping symbol.

In a case where a P-SRS is configured for a symbol in which an SRS resource with the resource type (RRC parameter "resourceType") set to "semi-persistent" is triggered, the UE transmits an SP-SRS resource, drops a P-SRS in an overlapping symbol, and transmits a P-SRS in a non-overlapping symbol.

Note that, one of reasons why simultaneous transmission of a plurality of channels (for example, a PUSCH and PUCCH, an SRS and PUCCH, and the like) is not supported in Rel. 15/16 is suppressing an increase in power consumption/peak-to-average power ratio (PAPR) of the UE.

### (Analysis)

In Rel. 18 or later versions, for improvement of UL throughput/reliability, support for simultaneous UL transmission using a plurality of panels for one or more TRPs is under study.

A multi-panel UL transmission scheme for scheduling of a PUSCH based on one piece of DCI (single DCI) is under study. For a multi-panel UL transmission scheme or a candidate for a multi-panel UL transmission scheme, at least one of the following schemes 1 to 3 (multi-panel UL transmission schemes 1 to 3) is under study. Only one of the schemes 1 to 3 may be supported. A plurality of schemes including at least one of the schemes 1 to 3 may be supported, and one of the plurality of schemes may be configured for the UE.

### [Scheme 1: Coherent Multi-panel UL Transmission]

A plurality of panels may be synchronized with each other. All layers are mapped to all the panels. A plurality of analog beams are indicated. An SRS resource indicator (SRI) field may be extended. This scheme may use four layers at maximum for UL.

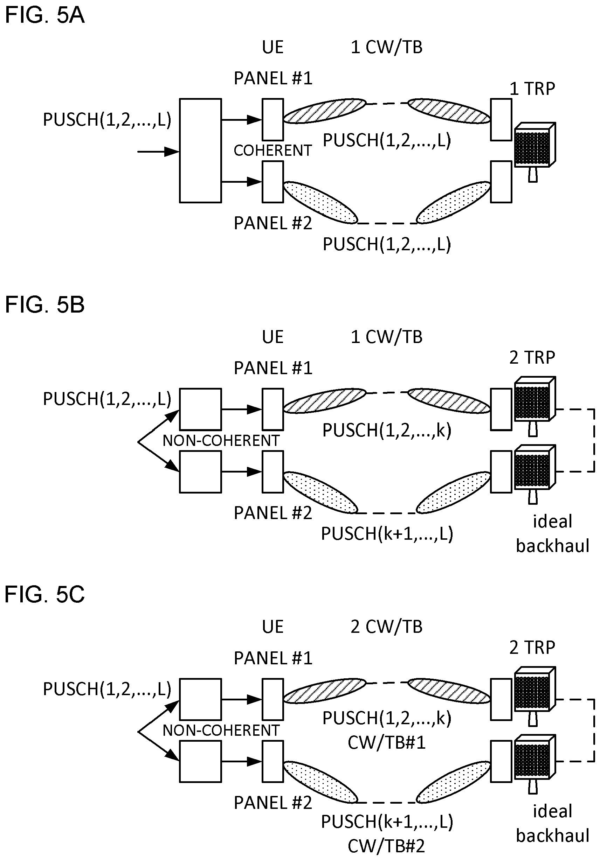

In an example in FIG. 5A, the UE maps one codeword (CW) or one transport block (TB) to L layers (PUSCHs (1, 2, ..., L)) and transmits the L layers from each of two panels. Panel #1 and panel #2 are coherent. Scheme 1 can obtain gain by diversity. The total number of layers in the two panels is 2L. In a case where the maximum total number of layers is four, the maximum number of layers per panel is two.

### [Scheme 2: Non-coherent Multi-panel UL Transmission of One Codeword (CW) or Transport Block (TB)]

A plurality of panels need not be synchronized with each other. Different layers are mapped to different panels and one CW or TB for PUSCHs from the plurality of panels. The layers corresponding to the one CW or TB may be mapped to the plurality of panels. This scheme may use four layers or eight layers at maximum for UL. In a case of supporting eight layers at maximum, this scheme may support one CW or TB using eight layers at maximum.

In an example in FIG. 5B, the UE maps one CW or one TB to k layers (PUSCHs (1, 2, ..., k)) and L - k layers (PUSCHs (k + 1, k + 2, ..., L)), and transmits k layers from panel #1 while transmitting L - k layers from panel #2. Scheme 2 can obtain gain by multiplexing and diversity. The total number of layers in the two panels is L.

### [Scheme 3: Non-coherent Multi-panel UL Transmission of Two CWs or TBs]

A plurality of panels need not be synchronized with each other. Different layers are mapped to different panels and two CWs or TBs for PUSCHs from the plurality of panels. The layers corresponding to one CW or TB may be mapped to one panel. The layers corresponding to a plurality of CWs or TBs may be mapped to different panels. This scheme may use four layers or eight layers at maximum for UL. In a case of supporting eight layers at maximum, this scheme may support four layers at maximum per CW or TB.

In an example in FIG. 5C, the UE maps CW #1 or TB #1 of two CWs or two TBs to k layers (PUSCHs (1, 2, ..., k)) while mapping CW #2 or TB #2 to L - k layers (PUSCHs (k + 1, k + 2, ..., L)), and transmits k layers from panel #1 while transmitting L - k layers from panel #2. Scheme 3 can obtain gain by multiplexing and diversity. The total number of layers in the two panels is L.

However, studies have not sufficiently been made on multi-panel (multi-beam) simultaneous UL transmission including a PUSCH and another channel/signal other than the PUSCH. Unless such studies are sufficient, degradation of system performance, such as reduction of throughput, may be caused.

In view of this, the inventors of the present invention came up with the idea of a method of performing simultaneous UL transmission using a plurality of panels.

Note that in the present disclosure, "A/B" may mean "at least one of A and B." In the present disclosure, "A/B/C" may mean "at least one of A, B, and C."

In the present disclosure, "at least one of a UL channel and UL signal", a "UL channel/signal", "transmission of a UL channel/signal", and "UL transmission" may be interchangeably interpreted.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

In the present disclosure, activate, deactivate, indicate, select, configure, update, determine, and the like may be interchangeably interpreted.

In the present disclosure, a panel, a beam, a panel group, a beam group, an Uplink (UL) transmission entity, a TRP, spatial relation information (SRI), a spatial relation, a control resource set (CORESET), a Physical Downlink Shared Channel (PDSCH), a codeword (CW), a transport block (TB), a base station, a certain antenna port (for example, a demodulation reference signal (DMRS) port), a certain antenna port group (for example, a DMRS port group), a certain group (for example, a code division multiplexing (CDM) group, a certain reference signal group, or a CORESET group), a certain resource (for example, a certain reference signal resource), a certain resource set (for example, a certain reference signal resource set), a CORESET pool, a PUCCH group (PUCCH resource group), a spatial relation group, a downlink Transmission Configuration Indication state (TCI state) (DL TCI state), an uplink TCI state (UL TCI state), a unified TCI state, QCL, and the like may be interchangeably interpreted.

A spatial relation information Identifier (ID) (TCI state ID) and spatial relation information (TCI state) may be interchangeably interpreted. "Spatial relation information" may be interpreted as a "set of pieces of spatial relation information," "one or a plurality of pieces of spatial relation information," and the like. A TCI state and TCI may be interchangeably interpreted.

In the present disclosure, an index, an ID, an indicator, and a resource ID may be interchangeably interpreted. In the present disclosure, a sequence, a list, a set, a group, a cluster, a subset, and the like may be interchangeably interpreted.

In the following description of embodiments, "spatial relation information (SRI)," "spatial relation information for PUSCH," a "spatial relation," a "UL beam," a "UE transmit beam," "UL TCI," a "UL TCI state," a "spatial relation of a UL TCI state," an SRS resource indicator (SRI), an SRS resource, a precoder, and the like may be interchangeably interpreted.

In the present disclosure, a PUSCH, a configured grant PUSCH, and repetition transmission (repetition) of a PUSCH may be interchangeably interpreted. In other words, operations for the PUSCH in each embodiment of the present disclosure are applicable for repetition transmission (repetition) of a configured grant PUSCH/PUSCH, as appropriate. In the present disclosure, a PUCCH and repetition transmission of a PUCCH may be interchangeably interpreted. The repetition transmission may be repetition transmission for single-TRP or may be repetition transmission for multi-TRP.

In the present disclosure, drop, stop, cancel, puncture, rate-match, postpone, and the like may be interchangeably interpreted.

In the present disclosure, overlap between channels/signals may mean that resources of the channels/signals overlap at least partially with one another in time or may mean that resources of the channels/signals overlap entirely with one another in time. In the present disclosure, overlap between channels/signals may mean that the channels are scheduled/configured/indicated overlapping with one another in time. In other words, the channels/signals overlapping with one another in time may be actually mapped/transmitted, or may not be actually mapped/transmitted.

In the present disclosure, "A and B overlap with each other", "A overlaps with B", and "at least a part of A overlaps with at least a part of B" may be interchangeably interpreted.

### (Radio Communication Method)

Multi-beam/panel simultaneous UL transmission may be configured for a UE. Such configuration may be performed using higher layer signaling (for example, RRC signaling/MAC CE)/physical layer signaling.

The configuration may be configuration related to multi-beam/panel simultaneous UL transmission or may be configuration related to multi-beam/panel simultaneous UL transmission over a plurality (plurality of types) of UL channels/signals.

The UE may report, to a network (NW) (for example, base station), capability information related to multi-beam/panel simultaneous UL transmission.

The UE capability information may be capability information of multi-beam/panel simultaneous UL transmission or may be capability information of multi-beam/panel simultaneous UL transmission over a plurality (plurality of types) of UL channels/signals.

The UE may report, to the NW, the capability information related to multi-beam/panel simultaneous UL transmission and be configured with the multi-beam/panel simultaneous UL transmission.

The NW may transmit, to the UE, information related to collision handling of the UL channels/signals described above. Such information may be transmitted using higher layer signaling/physical layer signaling.

In the following, a case will be mainly described in which the number of panels is two, but the number of panels may be two or more. Each embodiment of the present disclosure is applicable for transmission with three or more panels, as appropriate.

In the present disclosure, the base station may receive at least one of a plurality of UL channels/signals simultaneously transmitted from the UE.

### <First Embodiment>

In a first embodiment, a case will be described in which a first UL channel (for example, PUCCH) and a second UL channel (for example, PUSCH) overlap with each other in time. Note that the first UL channel may be a UL signal/channel other than the PUCCH and that the second UL channel may be a UL signal/channel other than the PUSCH.

The UE may perform multi-beam/panel simultaneous UL transmission for the PUSCH and the PUCCH.

A PUSCH in the present embodiment may be interchangeably interpreted as a PUCCH, as appropriate. In other words, the present embodiment may be applied to a case in which PUCCHs overlap with each other in time.

### <<Embodiment 1-1>>

When a PUCCH and a PUSCH overlap with each other in time, the UE need not perform simultaneous transmission of the PUSCH and the PUCCH.

When a PUCCH and a PUSCH overlap with each other in time, the UE may perform drop/multiplexing (mapping) and then transmit either one channel of the PUCCH or the PUSCH, in a manner similar to an existing specification.

At least one of drop/multiplexing (mapping) and determination/selection of one channel may be based on at least one of a kind of channel (for example, PUSCH or PUCCH), a channel content/type (data/UCI/HARQ-ACK/CSI/SR), a transmission timing/periodicity for a channel content (P/AP/SP), and a priority of a channel.

### <<Embodiment 1-2>>

When a PUCCH and a PUSCH overlap with each other in time, the UE may perform simultaneous transmission of the PUSCH and the PUCCH.

Association between a PUSCH/PUCCH (or beam/TCI state/spatial relation of the PUSCH/PUCCH) and a panel may be configured for the UE.

The UE need not simultaneously transmit a plurality of channels in each of a plurality of panels (one panel of the plurality of panels). In other words, the UE may transmit one channel in each of the plurality of panels to transmit a plurality of channels by using the plurality of panels.

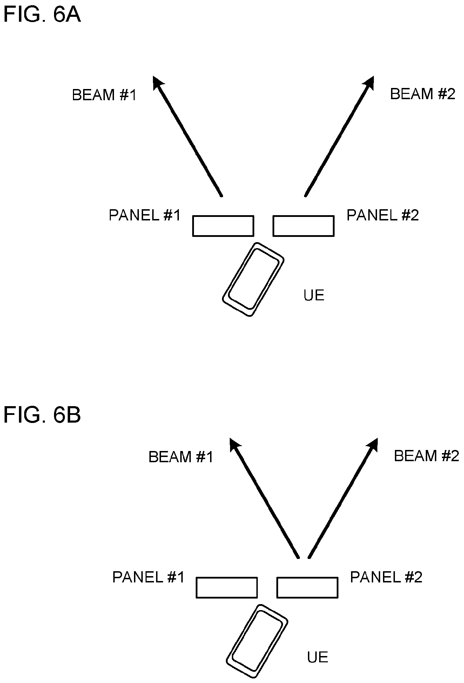

FIG. 6A is a diagram to show an example of multi-panel UL simultaneous transmission. In FIG. 6A, the UE includes a plurality of panels (panel #1 and panel #2). For the UE, when beam #1 corresponding to the first UL channel/signal is associated with panel #1 and beam #2 corresponding to the second UL channel/signal is associated with panel #2, the UE may be capable of simultaneous transmission of the first UL channel/signal and the second UL channel/signal.

FIG. 6B is a diagram to show another example of multi-panel UL simultaneous transmission. In FIG. 6B, the UE includes a plurality of panels (panel #1 and panel #2). For the UE, when beam #1 corresponding to the first UL channel/signal and beam #2 corresponding to the second UL channel/signal are associated with the same panel (in the example of FIG. 6B, panel #2), the UE need not perform simultaneous transmission of the first UL channel/signal and the second UL channel/signal (or the simultaneous transmission need not be supported).

When a PUCCH and a PUSCH are associated with the same panel, the UE may perform drop/multiplexing (mapping) and then transmit either one channel of the PUCCH or the PUSCH in each panel, in a manner similar to an existing specification (similarly to Embodiment 1-1 described above).

After performing drop/multiplexing (mapping) in each panel, when the PUSCH and the PUCCH are associated with respective different panels and the PUSCH and PUCCH overlap with each other in time, the UE may transmit both the PUSCH and PUCCH.

### <<Embodiment 1-3>>

When a PUSCH and a PUCCH are associated with respective different panels, a specific restriction (condition) for simultaneous transmission of the PUSCH and the PUCCH may be defined.

When the specific restriction is met/not met and the PUCCH and the PUSCH overlap with each other in time, the UE may perform drop/multiplexing (mapping) and then transmit either one channel of the PUCCH or the PUSCH, in a manner similar to an existing specification (similarly to Embodiment 1-1 described above).

The specific restriction may be at least one of restrictions described in Embodiment 1-3-1 to Embodiment 1-3-4 as below.

The specific restriction may be restriction related to the type of UCI (Embodiment 1-3-1). The UE may control simultaneous transmission of the PUSCH and the PUCCH of multi-panel, on the basis of the type of UCI transmitted (carried) on the PUCCH/PUSCH.

For example, when the PUCCH carries (is configured to carry) an HARQ-ACK/SR, the UE may perform control to perform simultaneous transmission of the PUCCH and PUSCH. Otherwise, the UE may not perform simultaneous transmission of the PUCCH and the PUSCH. When not performing simultaneous transmission of the PUCCH and the PUSCH, the UE may drop the PUCCH, or may multiplex (map), on the PUSCH, information to be carried on the PUCCH to transmit only the PUSCH.

The specific restriction may be restriction related to a transmit power of UL transmission (Embodiment 1-3-2). The UE may control simultaneous transmission of the PUSCH and the PUCCH of multi-panel, on the basis of presence or absence of restriction on the transmit power of the simultaneous transmission.

For example, when the transmit power of the UL transmission is not restricted, the UE may perform control to perform simultaneous transmission of the PUCCH and the PUSCH. When the transmit power of the UL transmission is restricted, the UE need not perform simultaneous transmission of the PUCCH and the PUSCH. When not performing simultaneous transmission of the PUCCH and the PUSCH, the UE may drop the PUCCH, or may multiplex (map), on the PUSCH, information to be carried on the PUCCH to transmit only the PUSCH. Alternatively, when the transmit power of the UL transmission is restricted, a transmit power of the PUCCH/PUSCH may be reduced (power scaling).

The specific restriction may be restriction related to whether the PUSCH carries UCI of a specific type from the same panel (Embodiment 1-3-3). The UE may control simultaneous transmission of the PUSCH and the PUCCH of multi-panel, on the basis of whether to transmit the UCI of the specific type from the same panel by using the PUSCH.

For example, when the PUSCH does not include an HARQ-ACK/CSI configured/indicated in the same panel, the UE need not perform simultaneous transmission of the PUCCH and the PUSCH. Otherwise, the UE may perform control to perform simultaneous transmission of the PUCCH and the PUSCH. When not performing simultaneous transmission of the PUCCH and the PUSCH, the UE may drop the PUCCH, or may multiplex (map), on the PUSCH, information to be carried on the PUCCH to transmit only the PUSCH.

The specific restriction may be restriction related to a beam (TCI state/spatial relation) of the PUSCH/PUCCH (Embodiment 1-3-4). The UE may control simultaneous transmission of the PUSCH and the PUCCH of multi-panel, on the basis of the beam of the PUSCH/PUCCH.

For example, when a beam of the PUSCH and a beam of the PUCCH are beams in which simultaneous transmission is possible based on configuration, the UE may perform control to perform simultaneous transmission of the PUCCH and the PUSCH. Otherwise, the UE may not perform simultaneous transmission of the PUCCH and the PUSCH. When not performing simultaneous transmission of the PUCCH and the PUSCH, the UE may drop the PUCCH, or may multiplex (map), on the PUSCH, information to be carried on the PUCCH to transmit only the PUSCH.

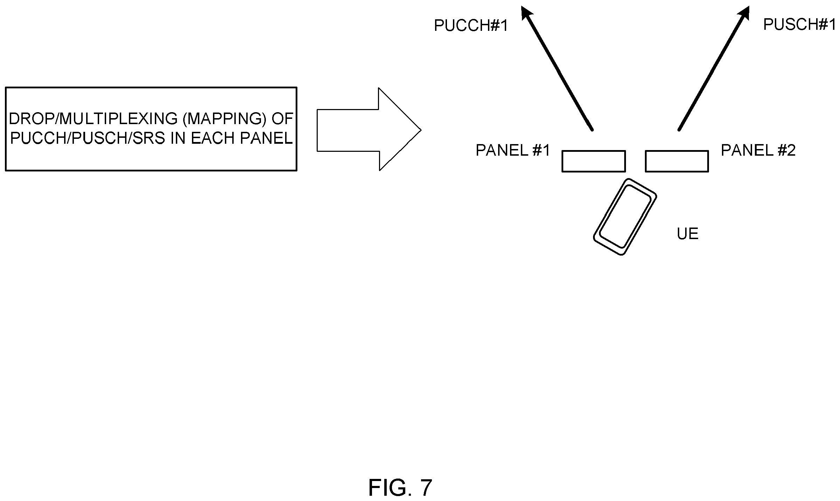

FIG. 7 is a diagram to show an example of simultaneous transmission of a PUCCH and a PUSCH according to the first embodiment. In FIG. 7, the UE may judge the simultaneous transmission on the basis of a specific restriction related to the UL simultaneous transmission.

In the example shown in FIG. 7, the UE performs drop/multiplexing of a PUCCH/PUSCH/SRS, in a manner such as FIGS. 3A, 3B, and 4 described above as an example, in each panel, and determines to transmit PUCCH #1 with panel #1 and PUSCH #1 with panel #2.

The UE control the simultaneous transmission of PUCCH #1 and PUSCH #1, on the basis of a specific restriction related to the UL simultaneous transmission.

The first embodiment described above allows multi-panel UL simultaneous transmission of a PUSCH and a PUCCH (or PUCCHs) to be appropriately performed.

### <Second Embodiment>

In a second embodiment, a case will be described in which a first UL channel/signal (for example, SRS) and a second UL channel (for example, PUSCH/PUCCH) overlap with each other in time. Note that the first UL channel/signal may be a UL signal/channel other than the SRS and that the second UL channel may be a UL signal/channel other than the

### PUSCH.

The UE may perform multi-beam/panel simultaneous UL transmission for the SRS and the PUSCH/PUCCH.

### <<Embodiment 2-1>>

When an SRS and a PUCCH/PUSCH overlap with each other in time, the UE need not perform simultaneous transmission of the SRS and the PUSCH/PUCCH.

When the SRS and the PUCCH/PUSCH overlap with each other in time, the UE may perform drop/multiplexing (mapping) and then transmit either one channel/signal of the SRS or the PUCCH/PUSCH, in a manner similar to an existing specification.

At least one of drop/multiplexing (mapping) and determination/selection of one channel may be based on at least one of a kind of channel (for example, PUSCH or PUCCH), a channel content/type (data/UCI/HARQ-ACK/CSI/SR), a transmission timing/type for a channel content (P/AP/SP), and a priority of a channel.

### <<Embodiment 2-2>>

When an SRS and a PUCCH/PUSCH overlap with each other in time, the UE may perform simultaneous transmission of the SRS and the PUSCH/PUCCH.

Association between an SRS/PUSCH/PUCCH (or beam/TCI state/spatial relation of the SRS/PUSCH/PUCCH) and a panel may be configured for the UE.

The UE need not simultaneously transmit a plurality of channels/signals in each of a plurality of panels (one panel of the plurality of panels) (see FIG. 6B). In other words, the UE may transmit one channel/signal in each of the plurality of panels to transmit a plurality of channels by using the plurality of panels.

When the SRS and the PUCCH/PUSCH are associated with the same panel, the UE may perform drop/multiplexing (mapping) and then transmit either one channel/signal of the SRS or the PUCCH/PUSCH in each panel, in a manner similar to an existing specification (similarly to Embodiment 1-1 described above) (see FIG. 6A).

After performing drop/multiplexing (mapping) in each panel, when the SRS and the PUSCH/PUCCH are associated with respective different panels and the SRS and the PUSCH/PUCCH overlap with each other in time, the UE may transmit both the SRS and the PUSCH/PUCCH.

### <<Embodiment 2-3>>

When an SRS and a PUSCH/PUCCH are associated with respective different panels, a specific restriction (condition) for simultaneous transmission of the SRS and the PUSCH/PUCCH may be defined.

When the specific restriction is met/not met and the SRS and the PUCCH/PUSCH overlap with each other in time, the UE may perform drop/multiplexing (mapping) and then transmit either one channel/signal of the SRS or the PUCCH/PUSCH, in a manner similar to an existing specification (similarly to Embodiment 1-1 described above).

The specific restriction may be at least one of restrictions described in Embodiment 2-3-1 to Embodiment 2-3-6 as below.

The specific restriction may be restriction related to the type of UCI (Embodiment 2-3-1). The UE may control simultaneous transmission of the SRS and the PUSCH/PUCCH of multi-panel, on the basis of the type of UCI transmitted (carried) on the PUCCH/PUSCH.

For example, when the PUCCH/PUSCH carries (is configured to carry) an HARQ-ACK/SR, the UE may perform control to perform simultaneous transmission of the SRS and the PUCCH/PUSCH. Otherwise, the UE may not perform simultaneous transmission of the SRS and the PUCCH/PUSCH. When not performing simultaneous transmission of the SRS and the PUCCH/PUSCH, the UE may drop the SRS/PUCCH/PUSCH.

The specific restriction may be restriction related to a transmit power of UL transmission (Embodiment 2-3-2). The UE may control simultaneous transmission of the SRS and the PUSCH/PUCCH of multi-panel, on the basis of presence or absence of restriction on the transmit power of the simultaneous transmission.

For example, when the transmit power of the UL transmission is not restricted, the UE may perform control to perform simultaneous transmission of the SRS and the PUCCH/PUSCH. When the transmit power of the UL transmission is not restricted, the UE need not perform simultaneous transmission of the SRS and the PUCCH/PUSCH. When not performing simultaneous transmission of the SRS and the PUCCH/PUSCH, the UE may drop the SRS/PUSCH/PUCCH, or may omit transmission of any one of the SRS/PUSCH/PUCCH in an overlapping time resource (for example, symbol). Alternatively, when the transmit power of the UL transmission is restricted, a transmit power of the SRS/PUCCH/PUSCH may be reduced (power scaling).

The specific restriction may be restriction related to whether the PUSCH/PUCCH carries UCI of a specific type from the same panel (Embodiment 2-3-3). The UE may control simultaneous transmission of the SRS and the PUCCH/PUSCH of multi-panel, on the basis of whether to transmit the UCI of the specific type from the same panel by using the PUSCH/PUCCH.

For example, when the PUSCH/PUCCH does not include an HARQ-ACK/CSI configured/indicated in the same panel, the UE need not perform simultaneous transmission of the SRS and the PUCCH/PUSCH. Otherwise, the UE may perform control to perform simultaneous transmission of the SRS and the PUCCH/PUSCH. When not performing simultaneous transmission of the PUCCH and the PUSCH, the UE may drop the SRS/PUSCH/PUCCH.

The specific restriction may be restriction related to a priority (priority index) of the PUSCH/PUCCH (Embodiment 2-3-4). The UE may control simultaneous transmission of the SRS and the PUCCH/PUSCH of multi-panel, on the basis of the priority index of the PUSCH/PUCCH.

For example, when the PUSCH/PUCCH has relatively a high priority, the UE need not perform simultaneous transmission of the SRS and the PUCCH/PUSCH. In this case, the UE may transmit only the PUCCH/PUSCH. For example, when the PUSCH/PUCCH has relatively a high priority, the UE may perform control to perform simultaneous transmission of the SRS and the PUCCH/PUSCH.

For example, when the PUSCH/PUCCH has relatively a low priority, the UE need not perform simultaneous transmission of the SRS and the PUCCH/PUSCH. In this case, the UE may transmit only the SRS. For example, when the PUSCH/PUCCH has relatively a low priority, the UE may perform control to perform simultaneous transmission of the SRS and the PUCCH/PUSCH.

The specific restriction may be restriction related to periodicity/type of an SRS to be configured (whether the SRS to be configured is an AP-SRS/P-SRS/SP-SRS) (Embodiment 2-3-5). The UE may control simultaneous transmission of the SRS and the PUCCH/PUSCH of multi-panel, on the basis of whether the SRS to be configured is an AP-SRS/P-SRS/SP-SRS.

For example, when the SRS is an AP-SRS, the UE need not perform simultaneous transmission of the SRS and the PUCCH/PUSCH. Otherwise, the UE may perform control to perform simultaneous transmission of the SRS and the PUCCH/PUSCH. When not performing simultaneous transmission of the PUCCH and the PUSCH, the UE may drop the SRS/PUSCH/PUCCH.

For example, when the SRS is a P-SRS, the UE need not perform simultaneous transmission of the SRS and the PUCCH/PUSCH. Otherwise, the UE may perform control to perform simultaneous transmission of the SRS and the PUCCH/PUSCH. When not performing simultaneous transmission of the PUCCH and the PUSCH, the UE may drop the SRS/PUSCH/PUCCH.

For example, when the SRS is an SP-SRS, the UE need not perform simultaneous transmission of the SRS and the PUCCH/PUSCH. Otherwise, the UE may perform control to perform simultaneous transmission of the SRS and the PUCCH/PUSCH. When not performing simultaneous transmission of the PUCCH and the PUSCH, the UE may drop the SRS/PUSCH/PUCCH.

The specific restriction may be restriction related to a beam (TCI state/spatial relation) of the SRS/PUSCH/PUCCH (Embodiment 2-3-6). The UE may control simultaneous transmission of the SRS and the PUSCH/PUCCH of multi-panel, on the basis of the beam of the SRS/PUSCH/PUCCH.

For example, when a beam of the SRS and a beam of the PUSCH/PUCCH are beams in which simultaneous transmission is possible based on configuration, the UE may perform control to perform simultaneous transmission of the SRS and the PUSCH/PUCCH. Otherwise, the UE need not perform simultaneous transmission of the SRS and the PUSCH/PUCCH. When not performing simultaneous transmission of the SRS and the PUSCH/PUCCH, the UE may drop the SRS/PUSCH/PUCCH.

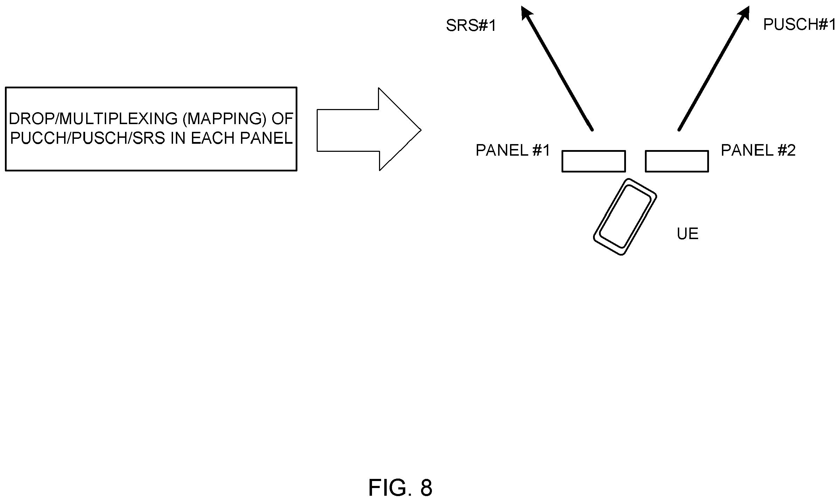

FIG. 8 is a diagram to show an example of simultaneous transmission of an SRS and a PUCCH/PUSCH according to the second embodiment. In FIG. 8, the UE may judge the simultaneous transmission on the basis of a specific restriction related to the UL simultaneous transmission.

In the example shown in FIG. 8, the UE performs drop/multiplexing of an SRS/PUCCH/PUSCH, in a manner such as FIGS. 3A, 3B, and 4 described above as an example, in each panel, and determines to transmit SRS #1 with panel #1 and PUSCH #1 with panel #2.

The UE control the simultaneous transmission of SRS #1 and PUSCH #1, on the basis of a specific restriction related to the UL simultaneous transmission.

The second embodiment described above allows multi-panel UL simultaneous transmission of an SRS and a PUSCH/PUCCH to be appropriately performed.

### <Third Embodiment>

In a third embodiment, a case will be described in which a first UL channel/signal (for example, SRS) and a second UL channel/signal (for example, SRS) overlap with each other in time. Note that the first UL channel/signal and the second UL channel/signal may each be a UL signal/channel other than the SRS.

The UE may perform simultaneous UL transmission of a plurality of (for example, two) SRSs.

### <<Embodiment 3-1>>

When a plurality of SRSs overlap with each other in time, the UE need not perform simultaneous transmission of the plurality of SRSs.

When the plurality of SRSs overlap with each other in time, the UE may perform drop/multiplexing (mapping) and then transmit any one of the plurality of SRSs, in a manner similar to an existing specification.

### <<Embodiment 3-2>>

When a plurality of SRSs overlap with each other in time, the UE may perform simultaneous transmission of the plurality of SRSs.

Association between SRSs (or beam/TCI state/spatial relation of each SRS) and panels may be configured for the UE.

The UE need not simultaneously transmit a plurality of SRSs in each of a plurality of panels (one panel of the plurality of panels) (see FIG. 6B). In other words, the UE may transmit one SRS in each of the plurality of panels to transmit a plurality of SRSs by using the plurality of panels.

When the plurality of SRSs are associated with the same panel, the UE may perform drop/multiplexing (mapping) and then transmit one SRS in each panel, in a manner similar to an existing specification (similarly to Embodiment 1-1 described above) (see FIG. 6A).

After performing drop/multiplexing (mapping) in each panel, when the SRSs are associated with respective different panels and the plurality of SRSs overlap with each other in time, the UE may transmit both the SRSs overlapping with each other.

### <<Embodiment 3-3>>

When a plurality of SRSs are associated with respective different panels, a specific restriction (condition) for simultaneous transmission of the plurality of SRSs may be defined.

When the specific restriction is met/not met and the plurality of SRSs overlap with each other in time, the UE may perform drop/multiplexing (mapping) and then transmit any one of the plurality of SRSs, in a manner similar to an existing specification (similarly to Embodiment 1-1 described above).

The specific restriction may be at least one of restrictions described in Embodiment 3-3-1 to Embodiment 3-3-5 as below.

The specific restriction may be restriction related to periodicity/type of an SRS to be configured (whether the SRS to be configured is an AP-SRS/P-SRS/SP-SRS) (Embodiment 3-3-1). The UE may control simultaneous transmission of the plurality of SRSs of multi-panel, on the basis of the periodicity/type of the SRS to be configured.

For example, when SRSs of different types are associated with different panels, the UE may perform simultaneous transmission of the plurality of SRSs. When SRSs of the same type are associated with different panels, the transmission of any one of the plurality of SRSs may be omitted in an overlapping symbol.

For example, when an AP-SRS is associated with a first panel and a P-SRS/SP-SRS is associated with a second panel, the UE may not perform simultaneous transmission of the AP-SRS and the P-SRS/SP-SRS. In this case, the UE may not transmit the P-SRS/SP-SRS in an overlapping symbol.

For example, when a P-SRS is associated with the first panel and an SP-SRS is associated with the second panel, the UE may not perform simultaneous transmission of the P-SRS and the SP-SRS. In this case, the UE may not transmit the SP-SRS in an overlapping symbol.

The specific restriction may be restriction related to a transmit power of UL transmission (Embodiment 3-3-2). The UE may control simultaneous transmission of the plurality of SRSs of multi-panel, on the basis of presence or absence of restriction on the transmit power of the simultaneous transmission.

For example, when the transmit power of the UL transmission is not restricted, the UE may perform control to perform simultaneous transmission of the plurality of SRSs. When the transmit power of the UL transmission is not restricted, the UE need not perform simultaneous transmission of the plurality of SRSs. When not performing simultaneous transmission of the plurality of SRSs, the UE may drop any one of the plurality of SRSs, or may omit transmission of any one of the plurality of SRSs in an overlapping symbol. Alternatively, when the transmit power of the UL transmission is restricted, a transmit power of the SRSs may be reduced (power scaling).

The specific restriction may be restriction related to SRS usage (Embodiment 3-3-3). The UE may control simultaneous transmission of the plurality of SRSs of multi-panel, on the basis of the SRS usage.

For example, when SRSs different in usage are associated with different panels, the UE may perform simultaneous transmission of the plurality of SRSs. When SRSs the same in usage are associated with different panels, the transmission of any one of the plurality of SRSs may be omitted in an overlapping symbol.

For example, when an SRS with usage of beam management (usage=beamManagement) is associated with a first panel and an SRS with usage of codebook (usage=codebook) is associated with a second panel, the UE may perform control not to perform simultaneous transmission of the plurality of SRSs. In this case, the UE may drop the SRS with the usage of beam management/SRS with the usage of codebook, or may omit transmission of the SRS with the usage of beam management/SRS with the usage of codebook, in an overlapping symbol.

For example, when an SRS with usage of beam management (usage=beamManagement) is associated with the first panel and an SRS with usage of non-codebook (usage=nonCodebook) is associated with the second panel, the UE may perform control not to perform simultaneous transmission of the plurality of SRSs. In this case, the UE may drop the SRS with the usage of beam management/SRS with the usage of non-codebook, or may omit transmission of the SRS with the usage of beam management/SRS with the usage of non-codebook, in an overlapping symbol.

For example, when an SRS with usage of beam management (usage=beamManagement) is associated with the first panel and an SRS with usage of antenna switching (usage=antennaSwitching) is associated with the second panel, the UE may perform control not to perform simultaneous transmission of the plurality of SRSs. In this case, the UE may drop the SRS with the usage of beam management/SRS with the usage of antenna switching, or may omit transmission of the SRS with the usage of beam management/SRS with the usage of antenna switching, in an overlapping symbol.

For example, when an SRS with usage of codebook (usage=codebook) is associated with the first panel and an SRS with usage of non-codebook (usage=nonCodebook) is associated with the second panel, the UE may perform control not to perform simultaneous transmission of the plurality of SRSs. In this case, the UE may drop the SRS with the usage of codebook/SRS with the usage of non-codebook, or may omit transmission of the SRS with the usage of codebook/SRS with the usage of non-codebook, in an overlapping symbol.

For example, when an SRS with usage of codebook (usage=codebook) is associated with the first panel and an SRS with usage of antenna switching (usage=antennaSwitching) is associated with the second panel, the UE may perform control not to perform simultaneous transmission of the plurality of SRSs. In this case, the UE may drop the SRS with the usage of codebook/SRS with the usage of antenna switching, or may omit transmission of the SRS with the usage of codebook/SRS with the usage of antenna switching, in an overlapping symbol.

For example, when an SRS with usage of non-codebook (usage=nonCodebook) is associated with the first panel and an SRS with usage of antenna switching (usage=antennaSwitching) is associated with the second panel, the UE may perform control not to perform simultaneous transmission of the plurality of SRSs. In this case, the UE may drop the SRS with the usage of non-codebook/SRS with the usage of antenna switching, or may omit transmission of the SRS with the usage of non-codebook/SRS with the usage of antenna switching, in an overlapping symbol.

The specific restriction may be restriction related to SRS configuration (for example, RRC parameter "SRS-Config") (Embodiment 3-3-4). The UE may control simultaneous transmission of the plurality of SRSs of multi-panel, on the basis of the SRS configuration.

For example, when SRSs associated with different panels overlap with each other in time but are not mapped to the same RE/Comb, the UE may perform simultaneous transmission of the plurality of SRSs. Otherwise, the UE may not perform simultaneous transmission of the plurality of SRSs. When not performing the simultaneous transmission, the UE may drop any one of the plurality of SRSs, or may omit transmission of any one of the plurality of SRSs in an overlapping symbol.

The specific restriction may be restriction related to a beam (TCI state/spatial relation) of an SRS (Embodiment 3-3-5). The UE may control simultaneous transmission of the plurality of SRSs, on the basis of the beam of the SRS.

For example, when a beam of an SRS associated with the first panel and a beam of an SRS associated with the second panel are beams in which simultaneous transmission is possible based on configuration, the UE may perform control to perform simultaneous transmission of the plurality of SRSs. Otherwise, the UE may not perform simultaneous transmission of the plurality of SRSs. When not performing the simultaneous transmission, the UE may drop any one of the plurality of SRSs, or may omit transmission of any one of the plurality of SRSs in an overlapping symbol.

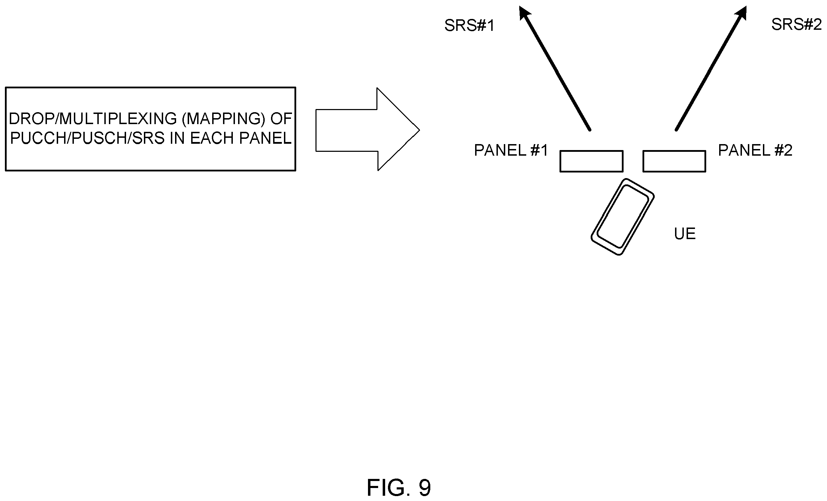

FIG. 9 is a diagram to show an example of simultaneous transmission of a plurality of SRSs according to the third embodiment. In FIG. 9, the UE may judge the simultaneous transmission on the basis of a specific restriction related to the UL simultaneous transmission.

In the example shown in FIG. 9, the UE performs drop/multiplexing of an SRS/PUCCH/PUSCH, in a manner such as FIGS. 3A, 3B, and 4 described above as an example, in each panel, and determines to transmit SRS #1 with panel #1 and SRS #2 with panel #2.

The UE control the simultaneous transmission of SRS #1 and SRS #2, on the basis of the specific restriction related to the UL simultaneous transmission.

The third embodiment described above allows multi-panel UL simultaneous transmission of a plurality of SRSs to be appropriately performed.

### <Fourth Embodiment>

A higher layer parameter (RRC IE)/UE capability corresponding to a function (characteristic, feature) in at least one of the plurality of embodiments described above may be defined. The UE capability may indicate support for the function.

A UE configured with a higher layer parameter corresponding to the function (activating the function) may perform the function. "A UE not configured with a higher layer parameter corresponding to the function does not perform the function (for example, conforms to Rel. 15/16)" may be defined.

A UE having reported the UE capability indicating the support for the function may perform the function. "A UE having not reported the UE capability indicating the support for the function does not perform the function (for example, conforms to Rel. 15/16)" may be defined.

When the UE reports the UE capability indicating the support for the function and is configured with a higher layer parameter corresponding to the function, the UE may perform the function. "When the UE does not report the UE capability indicating the support for the function or is not configured with a higher layer parameter corresponding to the function, the UE does not perform the function (for example, conforms to Rel. 15/16)" may be defined.

The UE capability may indicate whether the UE supports the function.

The function may be UL simultaneous transmission using multi-panel/multi-beam.

The function may be UL simultaneous transmission using multi-panel/multi-beam, for a PUSCH and a channel/signal other than the PUSCH.

The function may be UL simultaneous transmission using multi-panel/multi-beam, for different channels/signals.

The UE capability may be defined depending on whether to support simultaneous transmission of a plurality of (for example, two) different UL channels/signals.

The UE capability may be defined depending on whether to support simultaneous transmission of a PUCCH and a PUSCH.

The UE capability may be defined depending on whether to support simultaneous transmission of a plurality of PUCCHs (PUCCH and PUCCH).

The UE capability may be defined depending on whether to support simultaneous transmission of an SRS and a PUSCH/PUCCH.

The UE capability may be defined depending on whether to support simultaneous transmission of a plurality of SRSs (SRS (AP/P/SP-SRS) and SRS (AP/P/SP-SRS)).

The UE capability may be defined depending on whether to support association/configuration between a PUCCH/PUSCH/SRS/beam/TCI state/spatial relation and a panel/RS group.

The UE capability related to multi-channel simultaneous transmission and the UE capability related to UL simultaneous transmission using multi-panel may be defined as common capability information.

The UE capability related to multi-channel simultaneous transmission and the UE capability related to UL simultaneous transmission using multi-panel may be configured individually.

According to the fourth embodiment described above, the UE can achieve the above-described function while maintaining compatibility with an existing specification.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

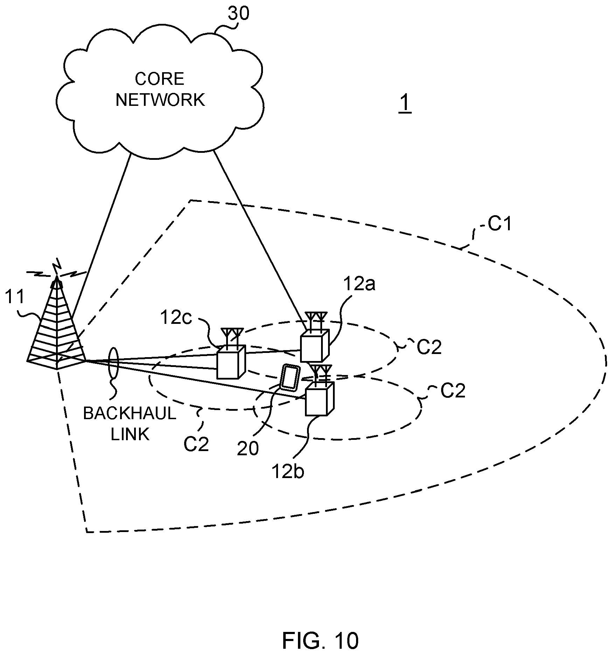

FIG. 10 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a reference signal for measurement (sounding reference signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

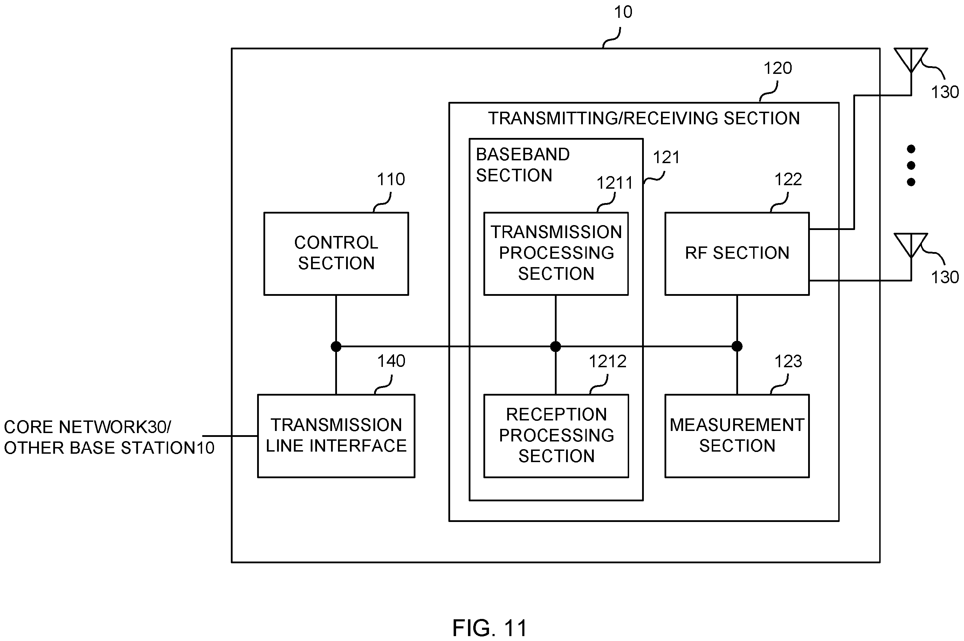

FIG. 11 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data, control information, and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, demapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

When UL transmission using a plurality of panels including at least a first panel and a second panel of a terminal (UE) is supported, the control section 110 may control transmission of information to perform drop or mapping of at least one of a UL channel and a UL signal overlapping with each other in time domain in panel unit. When a first UL transmission corresponding to the first panel and a second UL transmission corresponding to the second panel overlap with each other in time domain, the transmitting/receiving section 120 may receive at least one of the first UL transmission and the second UL transmission transmitted based on a specific condition (first to third embodiments).

### (User Terminal)

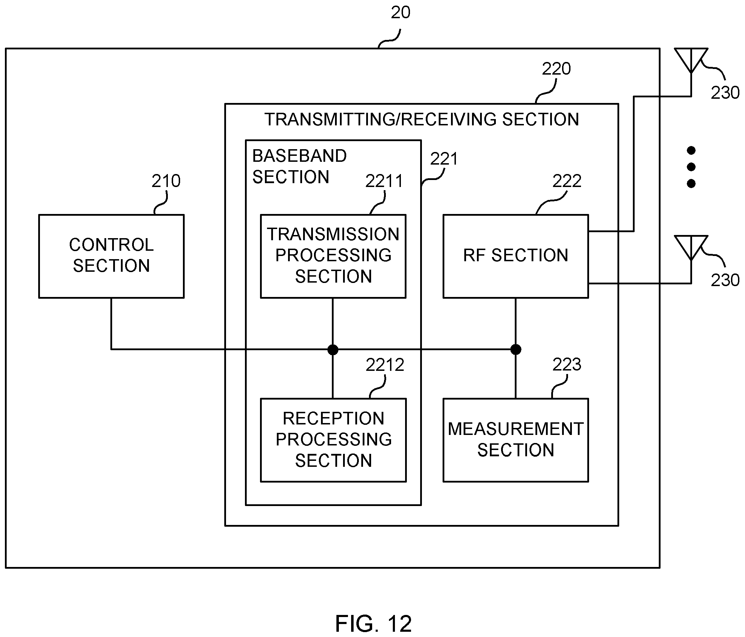

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing may be based on the configuration of the transform precoder. The transmitting/receiving section 220 (transmission processing section 2211) may perform, for a certain channel (for example, PUSCH), the DFT processing as the above-described transmission processing to transmit the channel by using a DFT-s-OFDM waveform if the transform precoder is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

When UL transmission using a plurality of panels including at least a first panel and a second panel is supported, the control section 210 may perform, in panel unit, drop or mapping of at least one of a UL channel and a UL signal overlapping with each other in time domain to determine a first UL transmission corresponding to the first panel and a second UL transmission corresponding to the second panel. When the first UL transmission and the second UL transmission overlap with each other in time domain, the transmitting/receiving section 220 may transmit at least one of the first UL transmission and the second UL transmission, on the basis of a specific condition (first to third embodiments).

When the first UL transmission is of a physical uplink shared channel (PUSCH) and the second UL transmission is of a physical uplink control channel (PUCCH), the specific condition may be at least one of a condition based on a type of uplink control information to be transmitted using the PUCCH, a condition related to a transmit power of each of the first UL transmission and the second UL transmission, a condition based on a type of uplink control information to be transmitted using the PUSCH, and a condition related to a beam of at least one of the first UL transmission and the second UL transmission (first embodiment).

When the first UL transmission is of at least one of a physical uplink shared channel (PUSCH) and a physical uplink control channel (PUCCH) and the second UL transmission is of a sounding reference signal (SRS), the specific condition may be at least one of a condition based on a type of uplink control information to be transmitted using the PUCCH, a condition related to a transmit power of each of the first UL transmission and the second UL transmission, a condition based on a type of uplink control information to be transmitted using the PUSCH, a condition related to a priority of the first UL transmission, a condition related to periodicity of the SRS, and a condition related to a beam of at least one of the first UL transmission and the second UL transmission (second embodiment).

When the first UL transmission is of a first sounding reference signal (SRS) and the second UL transmission is of a second SRS, the specific condition may be at least one of a condition related to periodicity of each of the first UL transmission and the second UL transmission, a condition related to a transmit power of each of the first UL transmission and the second UL transmission, a condition related to usage of each of the first UL transmission and the second UL transmission, a condition related to an SRS configuration, and a condition related to a beam of at least one of the first UL transmission and the second UL transmission (third embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

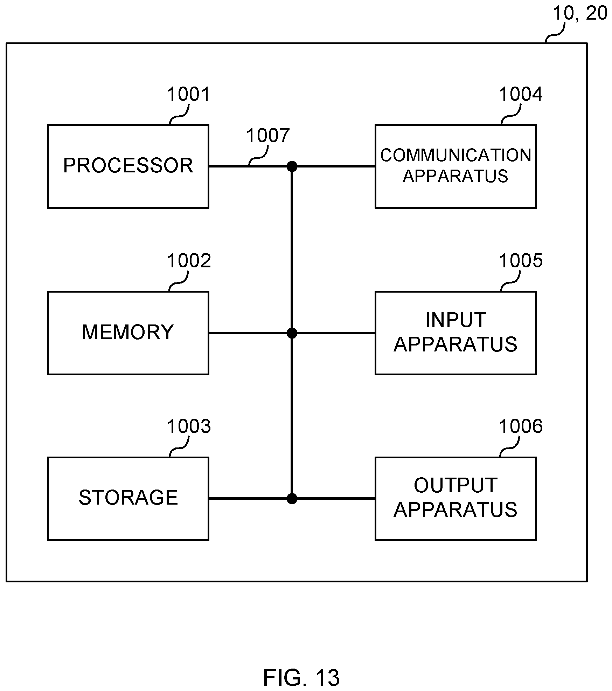

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. A "component carrier (CC)" may be referred to as a "cell," a "frequency carrier," a "carrier frequency," and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain channel/signal outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, notification of "being X") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" can be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that, when UL transmission using a plurality of panels including at least a first panel and a second panel is supported, performs, in panel unit, drop or mapping of at least one of a UL channel and a UL signal overlapping with each other in time domain to determine a first UL transmission corresponding to the first panel and a second UL transmission corresponding to the second panel; and
a transmitting section that, when the first UL transmission and the second UL transmission overlap with each other in time domain, transmits at least one of the first UL transmission and the second UL transmission, on the basis of a specific condition.

2. The terminal according to claim 1, wherein
when the first UL transmission is of a physical uplink shared channel (PUSCH) and the second UL transmission is of a physical uplink control channel (PUCCH), the specific condition is at least one of a condition based on a type of uplink control information to be transmitted using the PUCCH, a condition related to a transmit power of each of the first UL transmission and the second UL transmission, a condition based on a type of uplink control information to be transmitted using the PUSCH, and a condition related to a beam of at least one of the first UL transmission and the second UL transmission.

3. The terminal according to claim 1, wherein
when the first UL transmission is of at least one of a physical uplink shared channel (PUSCH) and a physical uplink control channel (PUCCH) and the second UL transmission is of a sounding reference signal (SRS), the specific condition is at least one of a condition based on a type of uplink control information to be transmitted using the PUCCH, a condition related to a transmit power of each of the first UL transmission and the second UL transmission, a condition based on a type of uplink control information to be transmitted using the PUSCH, a condition related to a priority of the first UL transmission, a condition related to periodicity of the SRS, and a condition related to a beam of at least one of the first UL transmission and the second UL transmission.

4. The terminal according to claim 1, wherein
when the first UL transmission is of a first sounding reference signal (SRS) and the second UL transmission is of a second SRS, the specific condition is at least one of a condition related to periodicity of each of the first UL transmission and the second UL transmission, a condition related to a transmit power of each of the first UL transmission and the second UL transmission, a condition related to usage of each of the first UL transmission and the second UL transmission, a condition related to an SRS configuration, and a condition related to a beam of at least one of the first UL transmission and the second UL transmission.

5. A radio communication method for a terminal, the radio communication method comprising:
performing in panel unit, when UL transmission using a plurality of panels including at least a first panel and a second panel is supported, drop or mapping of at least one of a UL channel and a UL signal overlapping with each other in time domain to determine a first UL transmission corresponding to the first panel and a second UL transmission corresponding to the second panel; and
transmitting, when the first UL transmission and the second UL transmission overlap with each other in time domain, at least one of the first UL transmission and the second UL transmission, on the basis of a specific condition.

6. A base station comprising:
a control section that, when UL transmission using a plurality of panels including at least a first panel and a second panel of a terminal is supported, controls transmission of information to perform drop or mapping of at least one of a UL channel and a UL signal overlapping with each other in time domain in panel unit; and
a receiving section that, when a first UL transmission corresponding to the first panel and a second UL transmission corresponding to the second panel overlap with each other in time domain, receives at least one of the first UL transmission and the second UL transmission transmitted on the basis of a specific condition.
